# DEMANDE DE BREVET EUROPEEN

(11) **EP 2 208 652 A1**
(43) Date de publication de la demande: **21.07.2010**
(21) Numéro de dépôt: 10150858.8
(22) Date de dépôt: 15.01.2010
(51) Int. Cl.: B60T 13/57

(54) **Simulateur à vanne trois voies pour servofrein de véhicule**

(30) Priorité: 15.01.2009 FR 0900178
(71) Demandeur: Robert Bosch GmbH, 70442 Stuttgart (DE)
(72) Inventeur: Anderson, Chris, 75002, PARIS (FR); Cagnac, Bastien, 60500, CHANTILLY (FR); Sprocq, Raynald, 77450, ESBLY (FR)
(74) Mandataire: Hurwic, Aleksander Wiktor

(57) **Abrégé**

Le simulateur (100) à vanne trois voies pour servofrein de véhicule, comprend :
- un carter présentant une enceinte (104) et trois conduits aptes chacun à communiquer directement avec l'enceinte ;
- un conduit (142) dit de maître cylindre ;
- un piston de commande (106) ;
- un coulisseau s'étendant dans l'enceinte (126) ; et
- un ressort (134) en appui contre le piston et le coulisseau.

Le conduit de maître cylindre (142) est agencé pour transmettre une pression de fluide sur le coulisseau, indépendamment du piston, de sorte que cette pression sollicite le coulisseau en direction opposée au piston.

## Description

L'invention concerne les systèmes de freinage de véhicules à servofrein et simulateur à vanne trois voies.

On connaît par exemple des documents FR-2 895 958 et FR-2 918 332 un système de freinage de véhicule qui comprend un dispositif de commande actionné par le conducteur au moyen d'une pédale de frein, un simulateur transmettant au conducteur une sensation sur la pédale lors de l'envoi de la commande, un servofrein d'assistance commandé par une vanne trois voies du simulateur, et un maître cylindre actionné par le servofrein.

Dans le fonctionnement d'un tel dispositif, on distingue classiquement une phase d'attaque, une phase de saut et une phase d'assistance proportionnelle. La phase d'attaque est celle au cours de laquelle le conducteur fournit un effort préalable n'entraînant en lui-même aucun freinage. Elle est suivie par la phase de saut au cours de laquelle le conducteur, avec une commande de faible intensité, produit un freinage également de faible intensité. Il s'agit d'un freinage confortable, par exemple lors du ralentissement à l'arrivée à un feu tricolore. La phase d'assistance proportionnelle est celle au cours de laquelle un freinage intense est demandé. Le servofrein actionne alors le maître cylindre sensiblement en proportion avec la course appliquée par le conducteur sur la pédale de frein.

Dans le document précité, durant la phase de saut, le conducteur doit comprimer un ressort interposé entre un piston de commande et un piston de réaction du simulateur. L'intensité du freinage obtenu est donc proportionnelle, également durant cette phase, à l'effort exercé par le conducteur sur la pédale. Le conducteur consacre donc une part de son énergie à effectuer ce freinage modéré. Or, si les circonstances nécessitent d'obtenir un freinage intense en urgence, l'énergie que pourra mobiliser le conducteur aura donc été préalablement en partie consommée par cet effort. Il s'agit d'un inconvénient car on préfère que le conducteur puisse à tout moment mobiliser le maximum de son énergie pour accomplir un freinage d'urgence.

Un but de l'invention est donc de préserver l'énergie du conducteur durant la phase de saut.

A cet effet, on prévoit selon l'invention un simulateur à vanne trois voies pour servofrein de véhicule, comprenant :
- un carter présentant une enceinte et trois conduits aptes chacun à communiquer directement avec l'enceinte ;
- un conduit dit de maître cylindre ;
- un piston de commande;
- un coulisseau s'étendant dans l'enceinte;
- un ressort en appui contre le piston et le coulisseau,
le conduit de maître cylindre étant agencé pour transmettre une pression de fluide sur le coulisseau, indépendamment du piston, de sorte que cette pression sollicite le coulisseau en direction opposée au piston.

Ainsi, durant la phase de saut, le piston de commande sollicite le coulisseau qui se trouve par ailleurs entraîné dans le même sens par la pression qui croît dans le circuit de freinage. Le conducteur, après la fourniture de l'effort d'attaque, n'a donc plus à fournir un effort supplémentaire pour que la pression dans le circuit de freinage continue à augmenter. Il lui suffit de déplacer davantage l'organe de freinage, par exemple la pédale de frein, pour que la pression dans le circuit de freinage augmente. Il commande donc le freinage en modifiant la course de la pédale, mais pas l'effort qu'il exerce dessus. Le freinage se fait ainsi, pendant la phase de saut, à effort constant. L'intensité du freinage obtenu est fonction de la course de la pédale mais plus de l'effort exercé sur elle. L'énergie du conducteur se trouve donc en grande partie préservée. Le conducteur peut donc mobiliser une plus grande part d'énergie en urgence si un freinage de grande intensité est rendu nécessaire par les circonstances.

Le simulateur selon l'invention pourra présenter en outre au moins l'une quelconque des caractéristiques suivantes :
- le ressort étant un premier ressort, le simulateur comprend un deuxième ressort en appui contre le coulisseau et le carter, et apte à solliciter le coulisseau en direction du piston de commande ;
- il comprend un piston dit de réaction, en communication avec un conduit inapte à communiquer avec l'enceinte dans le simulateur, le simulateur comprenant au moins un organe élastique apte à venir en appui, éventuellement indirect, sur le piston de réaction, par exemple en direction opposée au piston de commande ;
- il comprend un organe de réaction intermédiaire sollicité par l'organe élastique ou l'un des organes élastiques en direction du piston de réaction et apte à venir en appui contre le carter ;
- le piston de commande est apte à venir en appui rigide, de préférence direct, contre le piston de réaction ; et
- le piston de réaction est apte à venir en appui rigide, de préférence direct, sur le coulisseau, par exemple en direction du piston de commande ou en direction opposée au piston de commande.

De préférence, le simulateur comprend un piston dit de réaction, distant du piston de commande lorsque le simulateur est au repos, le simulateur étant agencé de sorte que le piston de commande, sous l'effet d'une commande transmise depuis l'extérieur du simulateur, peut être déplacé sur une course prédéterminée en direction du piston de réaction sans transmettre de sollicitation à ce dernier.

Ainsi, en cas de défaillance de la source de vide associée au servofrein, tant qu'il n'y a pas d'interaction entre les deux pistons dans le simulateur, notamment au début de la course du piston de commande, le conducteur ne sollicite pas le piston de réaction et ne consomme donc pas inutilement une partie de son énergie. Il peut donc ensuite consacrer davantage de cette énergie à l'actionnement du système de freinage. De préférence, le simulateur sera agencé de sorte que le jeu de découplage initial entre la tige du dispositif de commande et le piston du maître cylindre est annulé (de sorte que ceux-ci sont en contact) avant l'achèvement de la course prédéterminée. Le système n'aura donc pas consommé une part significative de l'énergie du conducteur avant que ce dernier ne commence à mettre en pression le circuit de liquide de freinage.

De préférence, le simulateur comprend, parmi les trois conduits:
- un conduit dit de travail ;
- un conduit dit de vide ; et
- un premier conduit dit atmosphérique,
le simulateur étant apte à mettre le conduit de travail en communication au choix avec le conduit de vide et avec le premier conduit atmosphérique,
le simulateur comprenant au moins un deuxième conduit atmosphérique et étant apte à mettre le conduit de travail en communication avec le deuxième conduit atmosphérique avant de le mettre en communication avec le premier conduit atmosphérique.

Ainsi, on fait en sorte que l'arrivée d'air atmosphérique dans la chambre de travail du servofrein se fasse d'abord avec un premier débit, puis avec un deuxième débit. On peut ainsi choisir, pendant une première période, un débit qui réduit les risques de génération de perturbations. Indépendamment de cela, pendant la deuxième période, une fois que le risque de perturbation est écarté, on peut prévoir un autre débit, par exemple un débit plus élevé. Ainsi, on aménage un premier débit pendant une période où des perturbations risquent d'apparaître et on passe à un second débit lorsque le risque de perturbation est écarté. Ce meilleur contrôle du débit d'air au début de l'arrivée d'air dans la chambre de travail évite les perturbations parasites.

On prévoit également selon l'invention un système de freinage comprenant un servofrein et un simulateur de commande du servofrein selon l'invention, le simulateur s'étendant par exemple à distance du servofrein.

On prévoit enfin selon l'invention un servofrein qui comprend un simulateur de commande selon l'invention.

L'invention a pour objet un simulateur, un système de freinage et un servofrein tels que revendiqués dans les revendications.

D'autres caractéristiques et avantages de l'invention apparaîtront dans la description suivante de plusieurs modes de réalisation donnés à titre d'exemples non limitatifs en référence aux dessins annexés sur lesquels :
- les figures 1 à 6 sont des vues en coupe axiale d'un simulateur selon un premier mode de réalisation de l'invention, montrant plusieurs étapes respectives de son fonctionnement ;
- la figure 7 illustre en coupe axiale un servomoteur selon un deuxième mode de réalisation de l'invention ;
- les figures 8 à 11 sont des vues partielles en coupe axiale du servomoteur de la figure 7 lors de différentes étapes de son fonctionnement ;
- les figures 12 à 15 sont des vues analogues aux figures 1 à 4 illustrant un simulateur selon un troisième mode de réalisation de l'invention ;
- la figure 16 est une vue d'un système de freinage selon un quatrième mode de réalisation de l'invention ;
- la figure 17 est une vue en coupe axiale à plus grande échelle du simulateur du système de la figure 16 ;
- les figures 18 à 34 sont des vues analogues à la figure 17 illustrant différents stades du fonctionnement du simulateur ; et
- la figure 35 est une courbe illustrant la pression dans les circuits de frein en fonction de la force d'entrée appliquée au simulateur.

### Premier mode de réalisation

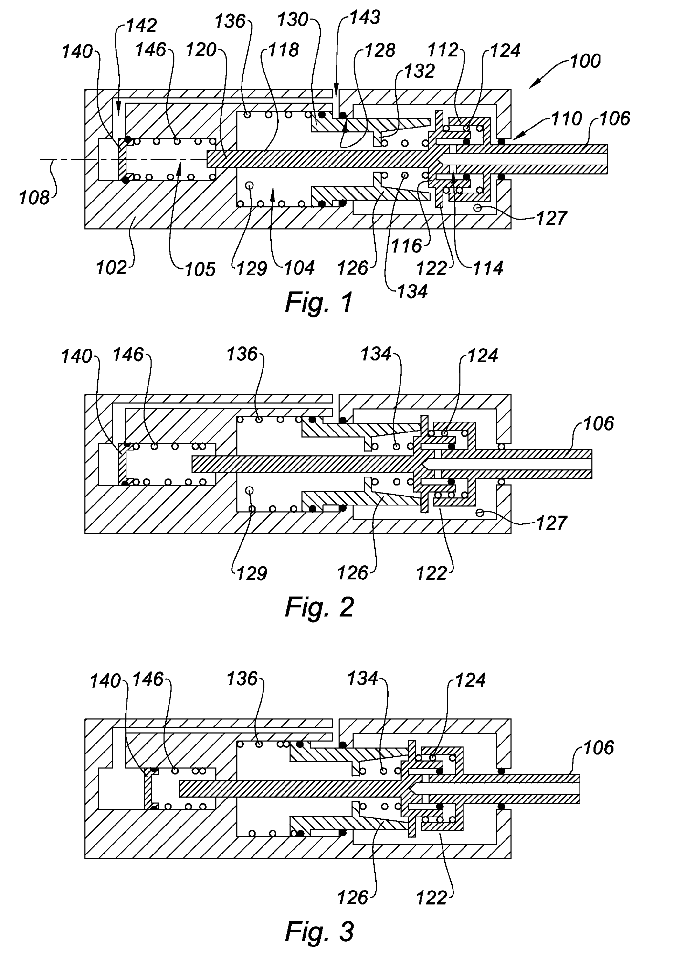

Nous allons décrire en référence à la figure 1 un premier mode de réalisation du simulateur de l'invention. Ce simulateur fait partie d'un système de freinage de véhicule automobile qui comprend:
- un dispositif de commande du freinage apte à recevoir une commande de freinage du conducteur du véhicule;
- un simulateur recevant la commande du dispositif de commande, comprenant une vanne à trois voies et apte à générer une sensation perçue à la pédale par le conducteur;
- un servomoteur d'assistance au freinage commandé par la vanne à trois voies et actionnant un maître-cylindre contrôlant la pression de liquide de frein dans les circuits de freinage du véhicule s'étendant jusqu'à des organes de freins situés près des roues.

Un tel système est connu en lui-même, par exemple du document FR-2 895 958.

Le simulateur 100 comprend un carter 102 présentant une enceinte arrière 104 et une enceinte avant 105. Sur les figures, par convention, la gauche correspond à l'avant tandis que la droite correspond à l'arrière.

Le simulateur comprend un piston de commande 106 ayant son axe longitudinal 108 en commun avec celui du simulateur 100. Le piston de commande pénètre dans l'enceinte 104 à travers une ouvertur/e arrière 110 du carter. Le piston 106 présente une collerette 112 dont un bord libre est dirigé vers l'avant. Cette collerette présente une paroi cylindrique reliée par un fond arrière à la tige du piston de commande. Le piston 106 présente un ou plusieurs orifices 114 mettant en communication une cavité interne arrière du piston qui communique avec l'air atmosphérique, avec la chambre arrière 104 comme on le verra plus loin. Le piston 106 présente un relief annulaire 116 dans sa zone médiane. Le piston 106 présente une tige avant 118 s'étendant dans l'enceinte arrière 104 et aussi dans l'enceinte avant 105 dans laquelle elle pénètre à travers un orifice 120 d'une paroi intermédiaire du carter séparant les deux enceintes.

Sauf indication contraire, toutes les pièces sont coaxiales d'axe 108 et à symétrie de révolution.

Le simulateur comprend un clapet 122 interposé suivant la direction axiale entre la collerette 112 et le relief annulaire 116. Le clapet est ainsi apte à venir en appui tantôt contre le bord d'extrémité libre de la collerette et tantôt contre la face arrière du relief 116. Le simulateur comprend un ressort de clapet 124 prenant appui contre une face avant du fond de la collerette et contre une face arrière du clapet. Ce ressort sollicite donc le clapet en direction du relief 116. Ce ressort, de même que ceux qui seront présentés plus loin, réalise des appuis suivant l'axe 108.

Le simulateur 100 comprend en outre une pièce intermédiaire, en l'espèce constituée par un coulisseau formant ici une douille 126 présentant une forme générale de manchon. La douille présente une face externe cylindrique en contact avec un épaulement 128 du carter avec interposition d'un joint d'étanchéité. La douille présente un rebord avant radial 130 s'étendant vers l'extérieur et en contact par sa face latérale externe avec une face interne du carter au niveau de la chambre arrière 104, avec ici encore interposition d'un joint d'étanchéité. La douille présente un relief annulaire interne 132 contre lequel vient en appui un ressort de valve 134 lui-même également en appui contre une face avant du relief 116 du piston de commande. La douille est traversée par le piston de commande.

Le simulateur comporte un ressort principal 136 ou ressort course-pression. Ce ressort est en appui vers l'avant contre une face avant de l'enceinte arrière et vers l'arrière contre une extrémité avant de la douille 126.

Selon l'invention, le simulateur comprend un piston de réaction hydraulique 140 dont une première face, typiquement la face avant, reçoit, par exemple par une canalisation 142, la pression de liquide de frein du maître-cylindre et une deuxième face, typiquement une face arrière, reçoit la pression d'un fluide compressible typiquement de l'air présent dans la chambre 105. Le piston de réaction est avantageusement muni d'un joint d'étanchéité. Dans l'exemple de réalisation (non limitatif), illustré, le piston de réaction 140 est logé dans la l'enceinte avant 105 entre l'orifice 120 et un conduit 142 débouchant dans l'enceinte 105 suivant une direction radiale à l'axe 108.

Le simulateur comprend un ressort de saut 146 prenant appui vers l'arrière contre une face arrière de l'enceinte avant 105 et vers l'avant contre une face arrière du piston 140.

Les pièces 106, 122, 126 et 140 sont rigides et montées mobiles à coulissement par rapport au carter 102 et les unes par rapport aux autres.

Le conduit 142 met en communication l'enceinte avant 105 par un orifice 143 avec le circuit de liquide pouvant être mis sous pression par le maître-cylindre.

Le piston de commande 106 est agencé pour recevoir, sous la forme d'une sollicitation mécanique, la commande du conducteur du véhicule transmise par un moyen adapté, par exemple la pédale de frein, via le dispositif de commande.

La partie de la chambre arrière 104 située en arrière de la douille 126 est en communication au moyen d'un conduit 127 avec la chambre à vide du servofrein. La partie de la chambre arrière 104 située en avant de la douille 126 est en communication au moyen d'un conduit 129 avec la chambre de travail du servofrein.

Le ressort de valve 134 a pour fonction de définir l'effort d'attaque lors de la commande du freinage. Il intervient donc avant la phase dite de saut.

Le ressort de saut 146 permet de réguler la pression du liquide du maître cylindre. Il permet aussi de choisir la sensation perçue à la pédale par le conducteur.

Le ressort principal 136 sert à définir la loi qui gouverne la pression régnant dans le maître cylindre en fonction de la course de la pédale. Il régule donc la pression dans le maître cylindre et fournit un effort au conducteur.

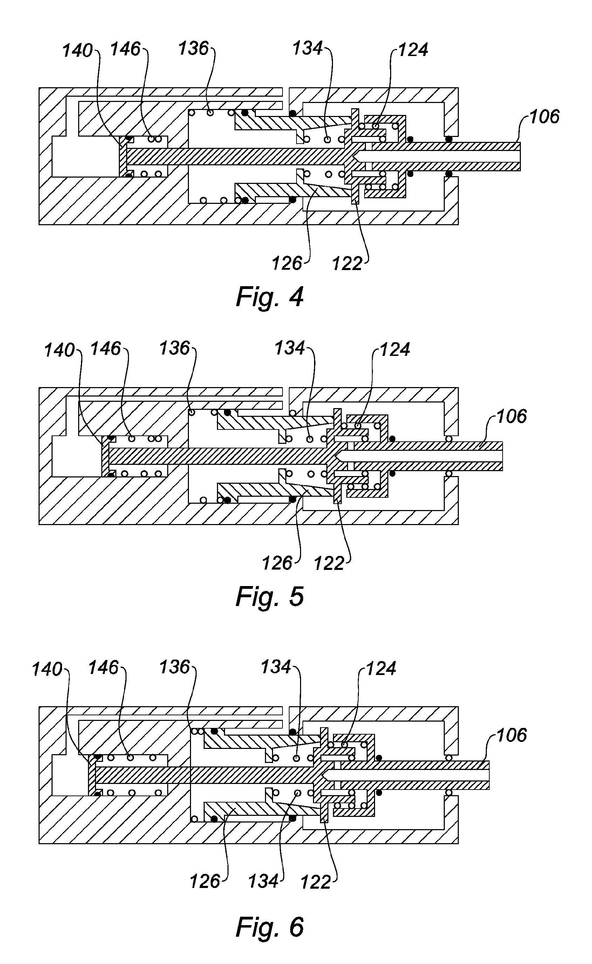

Le reste du système de freinage est par exemple tel que décrit dans le document FR-2 895 958, notamment le mode de réalisation de la figure 6,

Nous allons maintenant présenter le fonctionnement du simulateur.

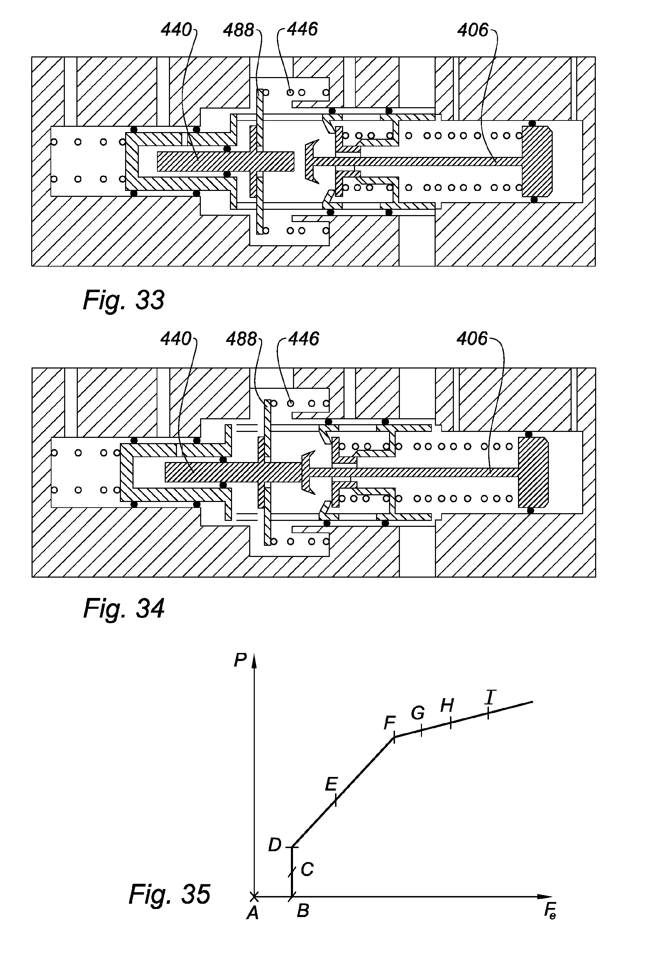

Dans la situation illustrée à la figure 1, le simulateur est au repos. Le clapet 122 est en appui sur le relief 116 sous l'effet de la sollicitation du ressort de clapet 124. Le clapet obture donc la cavité interne du piston de commande en ne permettant aucune communication entre l'air atmosphérique arrivant par la partie arrière du piston de commande et l'enceinte arrière 104. Le clapet s'étend par ailleurs à distance de la douille 126. L'enceinte arrière 104 du simulateur fait donc communiquer la chambre de travail et la chambre à vide du servofrein. Sur la figure 35 qui illustre l'évolution de la pression dans le maître cylindre en fonction de l'effort d'entrée appliqué au piston de commande, la figure 1 correspond donc au point A situé à l'intersection des axes des abscisses et des ordonnées.

La situation de la figure 2 correspond au point B de la même figure. Le conducteur a fourni un effort d'attaque transmis au dispositif de commande puis, par ce dernier, au piston de commande 106. L'effort d'attaque correspond à la distance entre les points A et B. La commande envoyée par le conducteur sur le piston 106 a provoqué le déplacement de ce dernier vers l'avant, c'est-à-dire vers la gauche sur la figure. Il s'en est suivi une compression du ressort de valve 134. La réaction fournie par ce dernier a été perçue par le conducteur. Même si d'autres organes ont pu intervenir dans cette perception, c'est ce ressort qui y a contribué principalement. Le clapet 122 suit le piston et arrive en contact avec la douille 126. La mise en appui du clapet contre la douille à la figure 2 interrompt la communication de la chambre de travail avec la chambre à vide en isolant l'une de l'autre les parties avant et arrière de l'enceinte arrière 105. A ce stade, la douille 126 n'a pas bougé. Le piston 140 et son ressort 146 non plus. Le saut, qui va permettre une montée en pression dans le maître cylindre, n'a pas encore eu lieu et s'apprête à commencer.

A partir de la situation de la figure 2, la suite de l'avancée du piston de commande 106 vers la gauche engendre un décollement de l'épaulement 116 à l'égard du clapet, ce qui met en communication l'air atmosphérique passant à travers le piston de commande avec la chambre de travail par le conduit 129. Cette chambre se remplit d'air et actionne le servofrein de sorte que la pression dans le maître cylindre commence à augmenter.

Le conduit 142 est également en communication avec le rebord 130 de la douille 126 sur sa face arrière. La pression dans le maître cylindre s'exerce donc vers l'avant, c'est-à-dire vers la gauche sur la figure 3, pour déplacer la douille dans la même direction. Sollicité par le ressort de clapet 124, le clapet 122 suit lui-même la douille pour rester en appui sur cette dernière.

Ainsi, le piston de commande 106 avance vers la gauche et se décolle du clapet 122. Mais l'augmentation de la pression dans le maître cylindre entraîne également la douille 126 vers la gauche et par suite le clapet en appui sur cette dernière qui tend donc à rejoindre le relief 116 du piston. Le clapet maintient donc son équilibre au cours du mouvement de l'équipage formé par le piston de commande 106, le clapet 122 et la douille 126.

On se trouve à la figure 3 et au point C sur la figure 35 au coeur de la phase de saut. Le conducteur perçoit en effet un effort constant au cours du saut allant du point B au point D. En raison du déplacement simultané de ces pièces, le ressort de valve 134 garde une longueur constante et n'est pas davantage comprimé. Cependant, la pression dans le maître cylindre augmente progressivement sous l'effet du servofrein, de sorte que le véhicule commence à décélérer progressivement. Mais cela se fait sans que la sollicitation du conducteur sur le piston de commande ne varie au cours de la course de ce dernier. La commande se fait donc en variant la course sur la pédale, pas en variant l'effort. Elle peut ainsi se faire à effort constant pour le conducteur. Le saut délimité par les points B et D sur la figure 35 doit normalement être une phase de confort, si le freinage est restreint à cette phase. Il correspond alors à une circonstance de freinage doux et progressif, par exemple en vue de l'arrêt à un feu tricolore. Il doit persister pour le conducteur une marge de course correspondant à une phase suivante au cours de laquelle l'effort qu'il exercerait serait proportionnel à l'effort de freinage et à la décélération du véhicule.

En retour, l'augmentation de cette pression se transmet à travers le conduit 142 jusqu'au piston de réaction 140 qui se trouve ainsi sollicité vers la droite à l'encontre du ressort de saut 146. L'ensemble de ce mouvement sert à écraser ce dernier. Ce dernier rencontre l'extrémité avant du piston de commande 106 dans la situation de la figure 4. Ce contact caractérise la fin de la phase de saut et le début de la phase proportionnelle.

Passé ce point, en référence à la figure 5 et au point E sur la figure 35, l'effort exercé par le conducteur sur le piston de commande 106 s'oppose directement à la pression régnant dans le maître cylindre, le piston de commande étant en appui direct contre le piston de réaction 140. Le conducteur perçoit donc directement la réaction hydraulique émanant du maître cylindre. Il perçoit dorénavant une sensation correspondant au ressort de valve 134 (qui délivre une force sensiblement constante) et surtout à la pression du maître cylindre qui augmente de façon proportionnelle à l'effort fourni par le conducteur.

La fin de cette phase proportionnelle correspond à la figure 6 et au point F. A ce stade, la douille 126 est arrivée en fin de course contre l'extrémité avant de l'enceinte arrière, avec interposition du ressort principal 136 qui a sa compression maximale. De préférence, on agence le simulateur de sorte que cette fin de course corresponde au point de saturation du servofrein et donc à la fin de la plage d'assistance fournie par ce dernier.

En effet, dans la suite du processus, par exemple au point G, le piston de commande peut se déplacer vers la gauche à travers la douille126 mais cette action se fait dorénavant sans l'assistance du servofrein. Le conducteur agit donc seul contre la pression du maître cylindre en sollicitant le piston de réaction. Cette action se fait également à l'encontre du ressort de valve 134.

On voit donc que le ressort de valve 134 se déplace au cours du saut avec les pièces en mouvement sans être davantage comprimé qu'il ne l'est lors de la fourniture de l'effort d'attaque. Par conséquent, l'effort ressenti à la pédale par le conducteur est sensiblement constant au cours de la phase de saut. Le conducteur n'a donc pas besoin de consacrer une grande énergie à cette phase. Il peut ainsi fournir encore beaucoup d'énergie si un freinage plus important s'avère nécessaire. On voit également que, à l'issue du saut, lors de la phase d'assistance proportionnelle, la mise en contact du piston de commande 106 avec le piston de réaction 140 permet au conducteur de ressentir l'évolution de la pression dans le maître cylindre. Il perçoit donc un effort de réaction proportionnel à l'augmentation de la pression dans le liquide. Il percevra aussi le cas échéant des fluctuations de la pression causées par un système d'anti-blocage des roues (ABS) ou un système de contrôle dynamique de trajectoire (ESP).

On observera que le choix de la section du piston de réaction 140 influe sur la pente du segment DF de la phase d'assistance proportionnelle du servofrein, c'est-à-dire sur le rapport d'assistance fourni par ce dernier.

### Deuxième mode de réalisation

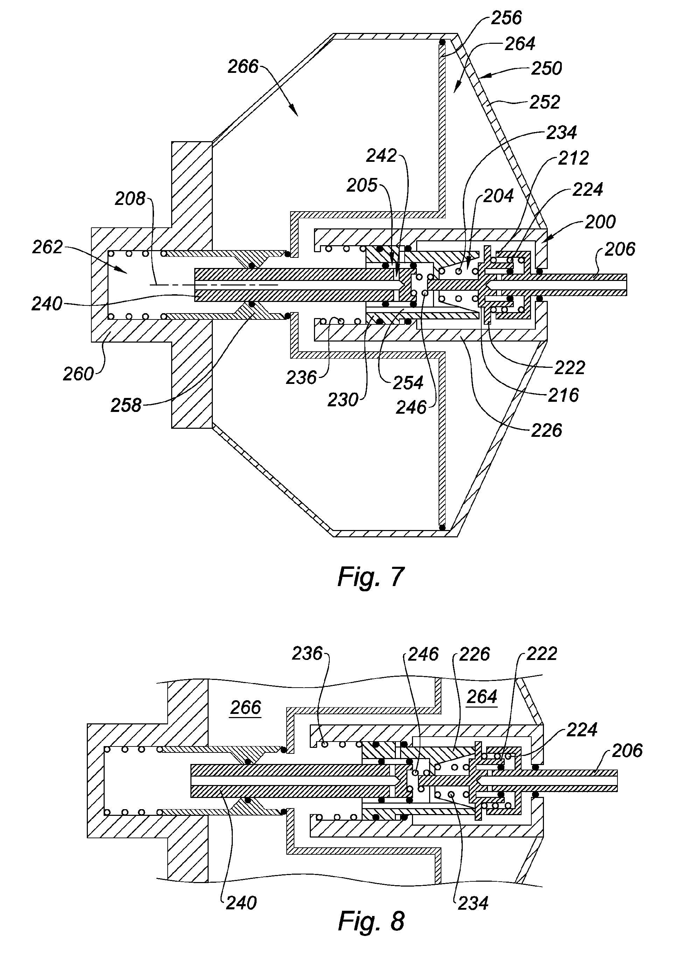

Nous allons décrire un deuxième mode de réalisation de l'invention en référence aux figures 7 à 11. Ce deuxième mode est relativement proche du précédent. Toutefois, le simulateur se trouve cette fois intégré au servofrein 250. Ainsi, le simulateur 200 est fixé par son extrémité arrière à une paroi arrière 252 du servofrein dans une position coaxiale à ce dernier. Le carter s'étend tout entier dans la chambre de travail 264 du servofrein.

De même que précédemment, le piston de commande 206 pénètre dans le carter du simulateur. On retrouve dans une configuration très proche à celle du premier mode de réalisation la collerette 212, le clapet 222, le relief 216 et la douille 226. Le piston de commande 206 s'interrompt peu après la traversée de la douille. De plus, il est en contact avec cette dernière. Dès lors, pour permettre une communication d'air entre les enceintes avant 205 et arrière 204 du simulateur, un conduit 254 est cette fois ménagé le long d'une face interne de la douille. Ce conduit est parallèle à l'axe 208 mais décentré par rapport à ce dernier.

Le piston de réaction 240 a cette fois une forme allongée telle qu'il pénètre par son extrémité arrière dans la partie avant de la douille. Il s'étend au-delà de l'extrémité avant du carter vers l'avant en traversant la membrane 256 du maître cylindre. Il traverse un support 258 monté mobile à coulissement dans le maître cylindre 260 du servofrein, représenté de façon schématique, et portant à son extrémité arrière la partie médiane de la membrane mobile 256 séparant la chambre de travail 264 de la chambre à vide 266 située à l'avant. Le piston de réaction 240 est évidé suivant son axe le long du piston et présente près de son extrémité arrière .deux conduits radiaux 242 mettant en communication une enceinte interne 262 du maître cylindre s'étendant à l'avant du piston de réaction avec une enceinte arrière annulaire étanche 205 de la douille. L'un des conduits 242 se prolonge suivant la direction radiale en traversant la douille 226 pour déboucher dans une deuxième enceinte annulaire ménagée entre la douille et le carter, en arrière du rebord 230 de la douille. Le liquide sous pression du maître cylindre peut ainsi solliciter la douille vers l'avant.

La partie arrière de l'enceinte arrière 204 du simulateur est reliée par un conduit non représenté à la chambre à vide 266 du servofrein. La partie avant de l'enceinte arrière 204 est reliée par le conduit 254 à la chambre de travail 264.

Le ressort de saut 246 est cette fois en appui vers l'avant contre le piston de réaction 240 et vers l'arrière contre l'extrémité avant de la douille 226. De plus, il est enfilé sur le piston de commande et traversé par ce dernier.

Le fonctionnement de ce mode de réalisation est analogue à celui du précédent.

Ainsi, la figure 7 représente le servofrein à l'état libre, en l'absence de sollicitation sur la pédale de frein, donc sur le piston de commande 206. Le clapet 222 est en appui sur le relief 216. Le vide règne dans la chambre avant 266 et l'enceinte arrière 204 du simulateur met en communication la chambre de travail 264 du servofrein avec la chambre à vide, notamment à travers le conduit 254 et compte tenu de l'espace existant entre la douille 226 et le clapet 222. On se trouve donc au point A de la figure 35.

Lorsque le conducteur appuie sur la pédale de frein, il déplace le piston de commande 206 vers la gauche au moyen d'un effort d'attaque. Cela place le clapet 222 en contact avec la douille 226. On se trouve alors au point B de la figure 35. Il s'agit de la fin du rattrapage du jeu existant entre le clapet et la douille et du début du saut. A ce stade, le conducteur n'a fait que compresser le ressort de valve 234. L'appui du clapet 222 sur la douille 226 interrompt la communication entre la chambre à vide et la chambre de travail 264.

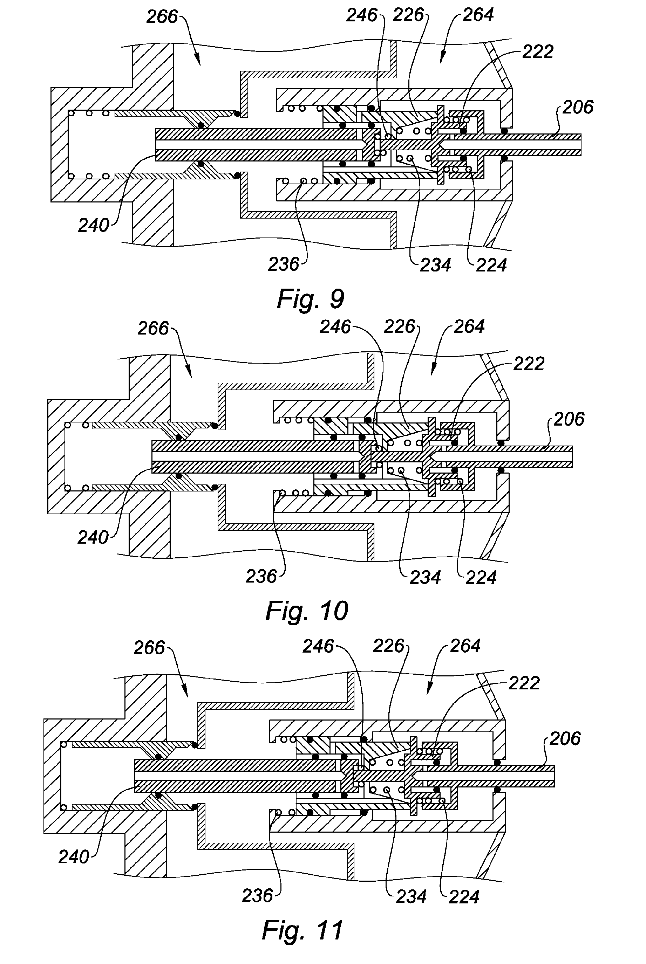

La poursuite de l'avancée du piston de commande crée une communication d'air à travers ce dernier entre l'air atmosphérique et la chambre de travail 264 via le conduit 254. La chambre de travail se remplit donc d'air progressivement, ce qui entraîne le déplacement vers l'avant de la membrane 256. Il s'ensuit une augmentation de la pression dans le maître cylindre. Cette pression régnant dans l'enceinte 262 se transmet à l'intérieur du piston de réaction jusqu'à la face arrière du rebord avant de la douille 226 et la déplace vers la gauche. Le clapet 122 suit donc l'avancée du piston de commande 206. On se trouve dans la situation de la figure 9 qui correspond au point C. Ainsi, au cours du saut, l'équipage formé par le piston de commande 206, le clapet 222, la douille 226 et le ressort 234 se déplace, le clapet recherchant son équilibre au cours de ce déplacement.

La situation de la figure 10 au point D marque la fin du saut et le début de la phase d'assistance proportionnelle. En effet, le piston de commande 206 vient en contact direct avec l'extrémité arrière du piston de réaction 240.

Au cours de la suite de l'avancée du piston de commande, par exemple lorsqu'on passe dans la situation de la figure 11 au point E, la sollicitation ressentie par le conducteur a été transmise à partir du liquide de frein par le piston de réaction 240.

Ce mode de réalisation permet un abaissement des coûts de fabrication. En effet, il ne nécessite pas de prévoir un conduit de transmission d'air entre le simulateur et la chambre de travail 264 du servofrein. Il accroît également l'efficacité du système de freinage en réduisant son temps de réponse.

### Troisième mode de réalisation

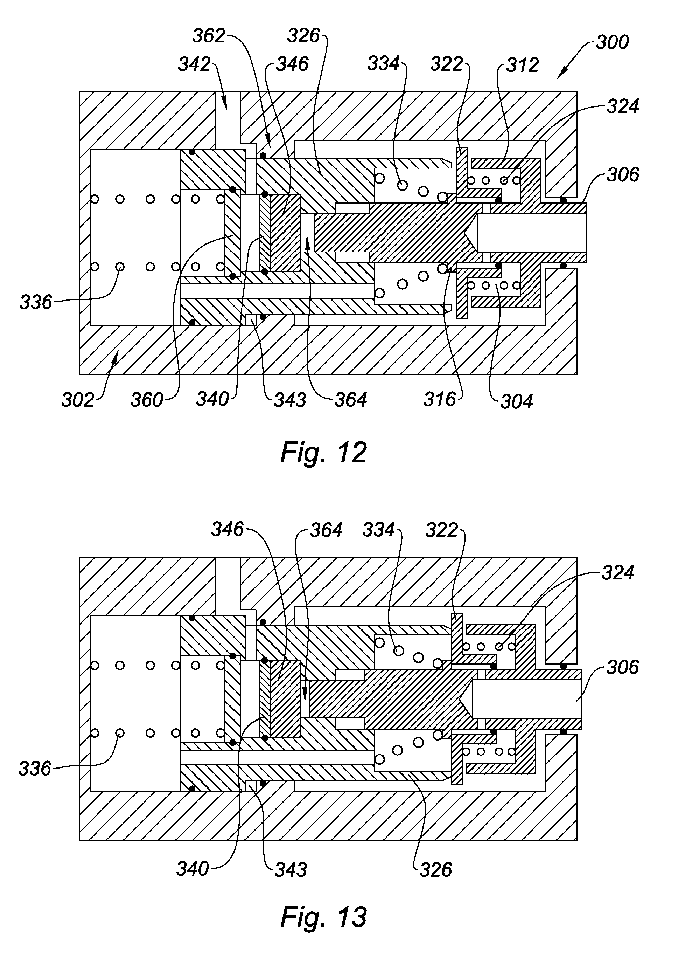

Un troisième mode de réalisation de l'invention est illustré aux figures 12 à 15.

A nouveau, c'est seulement le simulateur 300 qui a été illustré sur ces figures. La principale modification par rapport au premier mode de réalisation consiste dans le remplacement du ressort de saut 146 par un disque de réaction 346 en matériau élastique, par exemple en caoutchouc.

On retrouve comme précédemment le piston de commande 306, le clapet 322, la douille 326 et le ressort de valve 334. Le piston de réaction 340 est cette fois logé directement à l'intérieur de la douille 326. A cette fin, celle-ci est obturée en partie avant par un bouchon 360 qui, avant d'être mis en place, a permis l'introduction dans la douille d'abord du disque de réaction 346 puis du piston 340. La douille avec le bouchon 360 constitue, une fois ce dernier en place, un ensemble rigide d'un seul tenant. Le ressort principal ou ressort course-pression 336 est en appui, d'une part, contre une face avant du bouchon 360 et, d'autre part, contre la face arrière interne de la paroi avant du carter 302. Le conduit radial 342 met en communication avec le liquide du maître cylindre une cavité interne de la douille s'étendant entre le bouchon 360 et une face avant du piston 340. A cette fin, le conduit se prolonge dans la douille en elle-même par un tronçon radial 362. Ce conduit 342 met aussi en communication avec ce liquide une cavité annulaire 343 délimitée à l'avant par une face arrière du rebord de la douille.

La figure 12 représente le simulateur à l'état libre. Le clapet 322 est en appui contre le relief 316 mais à distance de la douille 326. Le simulateur met en communication la chambre de travail du servofrein avec sa chambre à vide. La pression dans le maître cylindre est basse de sorte que le disque 346 n'est pas déformé. On se trouve au point A de la figure 35.

Lorsque le conducteur actionne la pédale de frein, il déplace le piston de commande 306 vers la gauche jusqu'à mettre le clapet 322 en contact avec la douille 326. On se retrouve dans la situation de la figure 13 et au point B de la figure 35 marquant la fin de la fourniture de l'effort d'attaque et le début du saut. Le contact du clapet avec la douille interrompt la communication entre la chambre à vide et la chambre de travail du servofrein.

La poursuite du déplacement du piston de commande 306 crée un passage d'air atmosphérique entre ce dernier et le clapet, ce qui actionne le servofrein et entraîne une augmentation de la pression de liquide dans le maître cylindre. Cette dernière est transmise à la douille par les conduits 342 et 362, et s'exerce vers l'avant dans la cavité annulaire 343 pour déplacer cette dernière vers la gauche sur la figure 12. Le piston de commande se déplace donc avec le clapet et la douille vers l'avant.

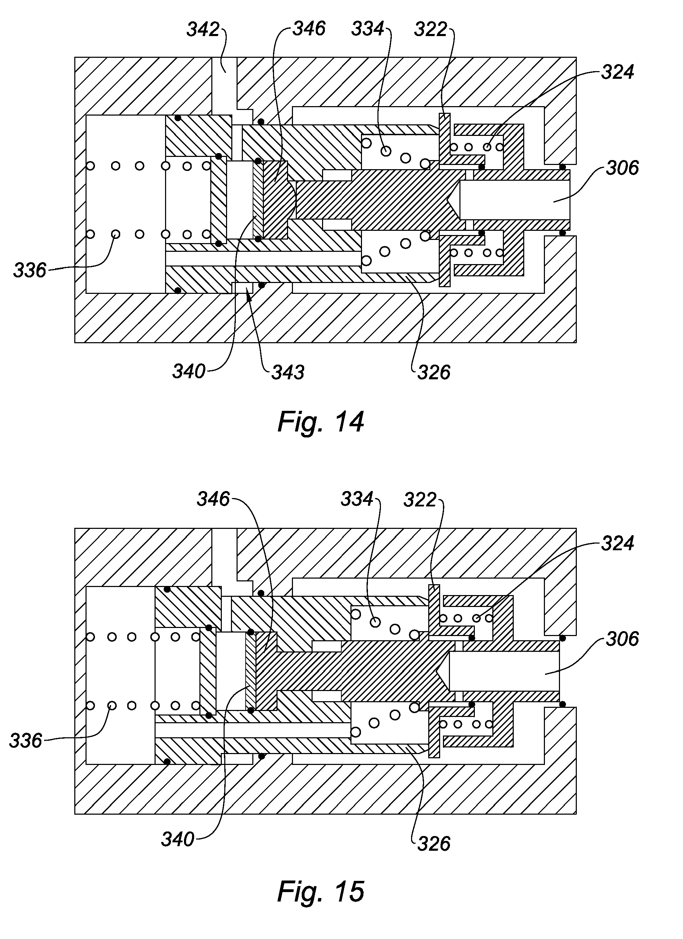

La pression régnant dans le maître cylindre s'exerce aussi contre le piston de réaction et sur le disque élastique 346 qui commence à fluer pour remplir un espace 364 délimité à l'avant par le disque élastique et à l'arrière par l'extrémité avant du piston de commande. La fin du saut à la figure 14 et au point D à la figure 35 correspond à la mise en contact du disque déformé avec le piston de commande 306.

A partir de ce moment, un effort supplémentaire du conducteur sur le piston de commande s'exerce à l'encontre du disque de réaction 346 et de la pression régnant dans le maître cylindre ressentie par le conducteur. Ainsi, à la figure 15 qui correspond au point E à la figure 35, on se trouve pendant la phase d'assistance. La pression en augmentation qui règne dans le maître cylindre est transmise par le piston de réaction et le disque élastique au piston de commande et donc perçue par le conducteur.

La suite du fonctionnement est la même que dans les précédents modes de réalisation.

On observera que le disque de réaction élastique 346 se trouve à l'intérieur du simulateur et exposé à la pression régnant dans le maître cylindre.

Ici encore, le choix de la section du piston de réaction permet de déterminer le rapport d'assistance que l'on souhaite obtenir sur le segment d'assistance proportionnel DF sur la figure 35.

### Quatrième mode de réalisation

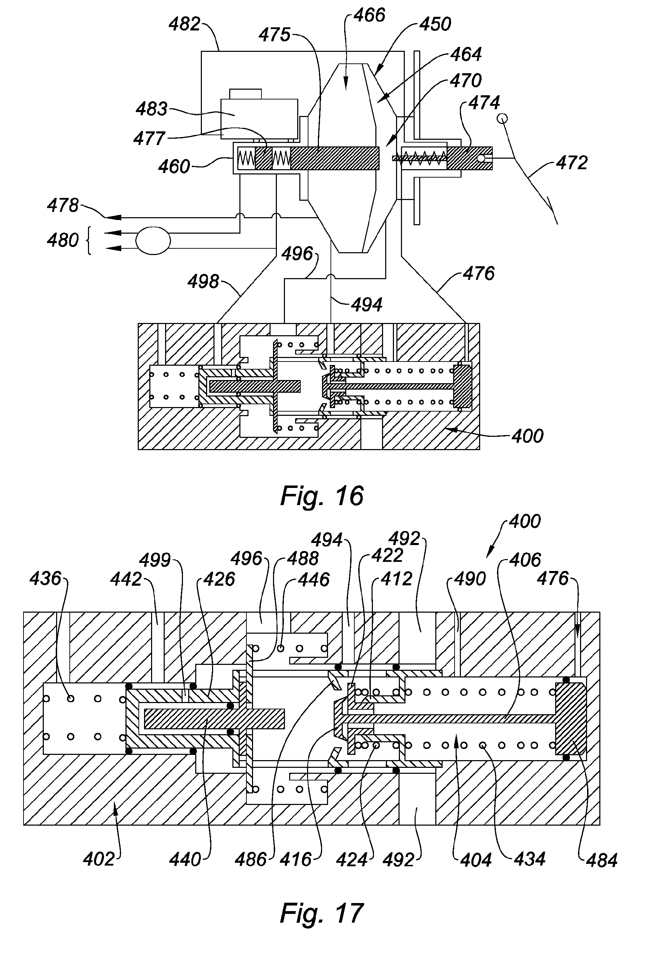

Nous allons décrire en référence aux figures 16 à 34 un quatrième mode de réalisation de l'invention.

On a illustré à la figure 16 une vue d'ensemble du système dans lequel s'intègre le simulateur 400 de ce quatrième mode. Dans ce mode de réalisation, le système comprend un dispositif de commande hydraulique du freinage 470 intégré coaxialement au servofrein 450. La pédale de frein 472, ou tout organe analogue, qui sert au conducteur pour commander le freinage est reliée à une tige de commande 474 montée mobile à coulissement par rapport au carter du servofrein suivant l'axe de ce dernier. La tige pénètre à l'intérieur de la chambre de travail 464 et présente une extrémité qui se trouve au repos à distance d'une tige de poussée 475 du maître cylindre 460. Cette disposition permet, en cas de défaillance du simulateur 400 ou du servofrein 450 comme on va le voir plus bas, d'exercer une pression à partir de la tige de commande 474 directement sur la tige 475. La tige 474, commandé par la pédale de frein, est apte à mettre sous pression de fluide une chambre du dispositif de commande hydraulique qui transmet cette pression dans un conduit 476 débouchant dans le simulateur 400 en amont du piston de commande. Un conduit 482 partant d'un réservoir de liquide 483 permet d'alimenter en liquide de freinage l'intérieur du dispositif de commande 470.

Le simulateur 400 reçoit la pression ainsi injectée et permet, selon la position du piston, de commander le fonctionnement du servomoteur d'assistance au freinage comme on le verra plus bas.

Le dispositif comprend une source de dépression 478 permettant de faire le vide dans la chambre à vide 466 du servofrein. Le maître cylindre 460 comprend deux pistons 475 et 477, le premier étant assimilé à la tige 475 pour plus de simplicité. Des circuits hydrauliques de freinage 480 permettent de retransmettre la pression de freinage aux organes de frein des roues du véhicule.

Pour plus de détails sur les éléments autres que le simulateur 400, on pourra se référer au document FR-2 895 958.

Dans le présent exemple, le piston de commande 406 est logé intégralement à l'intérieur du carter 402 du simulateur 400. Il présente à son extrémité arrière un palpeur 484 qui subit à sa face arrière la pression de liquide venant du conduit 476. Le relief du piston de commande est formé par une butée 416 à l'extrémité avant du piston. Le palpeur 484 et la butée 416 sont reliés l'un à l'autre par une tige sur laquelle est enfilé le clapet 422.

Ce dernier peut venir en appui tantôt contre la butée 416 tantôt contre une collerette 412 de la douille 426, s'étendant en arrière du clapet. La douille comporte en outre un relief 486 s'étendant en regard de la face avant du clapet, du même côté par conséquent que la butée 416 et contre lequel le clapet peut également venir en appui.

Le ressort de valve 434 est en appui vers l'arrière contre le palpeur 484 et vers l'avant contre la base de la collerette 412.

Le ressort de clapet 424, comme précédemment, prend appui vers l'arrière contre cette collerette et vers l'avant contre le clapet 422 pour solliciter ce dernier en appui sur la butée 416 au repos comme sur la figure 17.

Le ressort de saut 446 prend appui vers l'arrière contre une face du carter 402 et vers l'avant contre une rondelle mobile 488.

Cette dernière est traversée en son centre par une extrémité arrière du piston de réaction 440 qui présente un épaulement par lequel il vient en butée vers l'arrière contre une face avant de la rondelle 488. Le piston 440 présente une extrémité avant enfilée dans l'extrémité avant de la douille 426, laquelle pénètre dans une enceinte avant 105 du carter 402.

Le carter présente un premier conduit radial 490 mettant en communication l'extérieur du carter à l'air atmosphérique avec l'enceinte arrière 404 en avant du palpeur 484. Le carter présente au moins un deuxième conduit radial 492 et en l'espèce deux conduits, susceptibles chacun de déboucher aussi en avant du palpeur pour mettre l'enceinte arrière en communication avec l'air atmosphérique. Contrairement au conduit 490, les conduits 492 ne réalisent pas cette communication en permanence. Ainsi, au repos comme sur la figure 17, l'extrémité arrière de la douille 426 obture ces conduits. De plus, ces conduits présentent une section courante très supérieure à celle du conduit 490 et permet donc un débit d'air plus élevé.

Le carter présente un conduit radial 494 mettant en communication une zone médiane de l'enceinte arrière 404, occupée par le clapet 422, située entre la collerette 412 et le relief 486, avec la chambre à vide 466 du servofrein elle-même reliée à la source de vide 478.

Le carter comprend aussi un conduit radial ,496 débouchant dans l'enceinte 404, entre la butée 416 et la rondelle 488, pour la mettre en communication avec la chambre de travail 464 du servofrein.

Des orifices sont également prévus dans la douille au droit du conduit 496 et au droit de la collerette 412.

Un autre conduit radial 442 du carter met en communication une enceinte interne avant de la douille dans laquelle se trouve le piston de réaction 440 avec la pression primaire régnant dans le maître cylindre. A cette fin, un orifice 499 traverse radialement la paroi de la douille.

La figure 17 illustre le simulateur au repos, en l'absence donc de l'actionnement de la pédale 472. Le palpeur 484 est en butée contre l'extrémité arrière du carter. Le clapet 422 est en appui contre la butée avant 416. La rondelle 488 est en butée vers l'avant contre le carter 402. Le piston de réaction 440 est en butée vers l'arrière contre lé disque. La douille est en butée vers l'arrière à la fois contre le carter à l'arrière de ce dernier, au niveau d'un épaulement situé entre les conduits 490 et 492, et contre le piston de réaction 440. Une communication est donc établie du conduit 494 à travers la douille devant le clapet, jusqu'au conduit 496. La chambre à vide et la chambre de travail sont donc à la même pression. Il n'y a pas de pression dans le maître cylindre. On se trouve au point A de la figure 35.

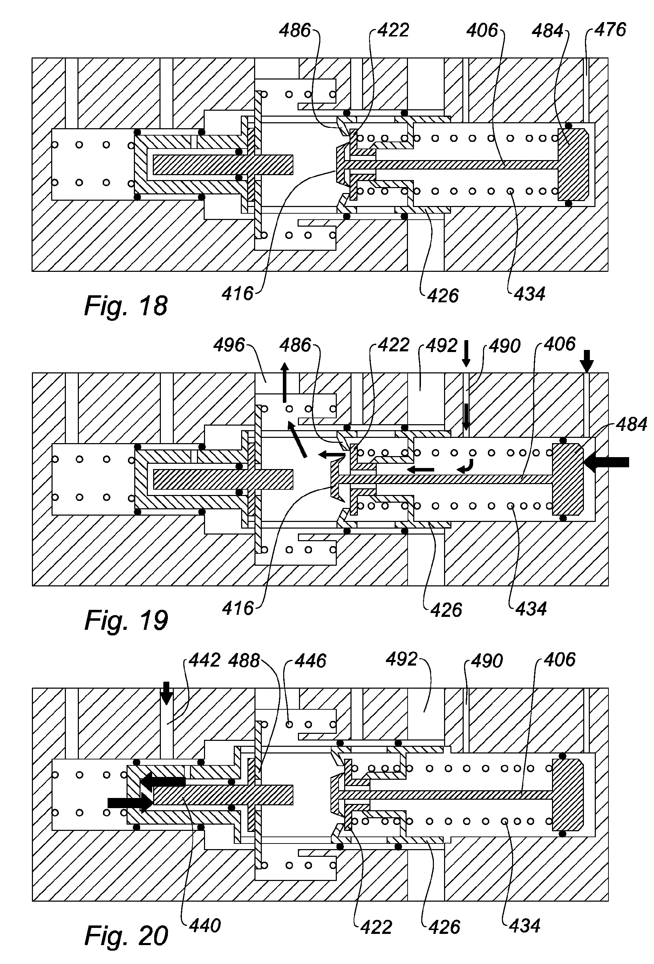

On va tout d'abord expliquer en référence aux figures 18 à 23 le fonctionnement du simulateur lorsque la commande envoyée par le conducteur est telle que le saut se produit presque complètement, puis la pression redescend, la commande étant interrompue.

En référence à la figure 18, l'envoi de la commande au moyen de la pédale 478 fait croître la pression de liquide en amont du palpeur 484, ce qui déplace le piston de commande 406 vers l'avant et place le clapet 422 en contact avec le relief 486. La chambre de travail 464 se trouve donc isolée à l'égard de la chambre à vide. On se trouve alors au point B.

A la figure 19, la poursuite du mouvement du piston de commande 406, sous l'effet de la pression qui croît en arrière du palpeur, entraîne un décollement de la butée 416 qui s'éloigne vers l'avant à l'égard du clapet. Une communication d'air s'établit alors entre l'air atmosphérique arrivant par le conduit 490 entre la tige du piston de commande et le clapet, puis entre la butée 416 et le clapet et enfin entre la butée et l'épaulement 486. L'air peut alors s'échapper jusqu'au conduit 496 et parvenir dans la chambre de travail 464. Compte tenu de la faible section du conduit 490, c'est un faible débit d'air qui passe à ce stade.

La membrane du servofrein commence donc à se déplacer lentement, ce qui augmente la pression dans le maître cylindre. Cette pression est transmise au simulateur par le conduit 442, comme illustré à la figure 20. A travers la douille 426, elle est transmise au piston de réaction 440, mais ce dernier demeure bloqué par le ressort de saut 446 qui immobilise toujours la rondelle 488. Cette pression se transmet aussi à la douille en la sollicitant vers l'avant. L'avancée de la douille permet au clapet 422 de rattraper son siège formé par la butée 416, ce qui obture la communication d'air qui venait d'être établie. De plus, la douille a encore trop peu avancé pour libérer les conduits 492.

Le conducteur continuant à solliciter le piston de commande, le même phénomène se poursuit de façon analogue à ce qu'on a décrit dans le précédent mode de réalisation. Le clapet se déplace ainsi avec les autres pièces en recherchant son équilibre. A ce stade, on se trouve donc à un point situé entre les points B et C sur la figure 35, le saut ayant été amorcé. Le déplacement du piston de commande 406, de la douille 426, du clapet 422 et du ressort de valve 434 se fait sans que ce dernier ne soit davantage comprimé comme déjà expliqué. Il a donc ici encore son caractère flottant.

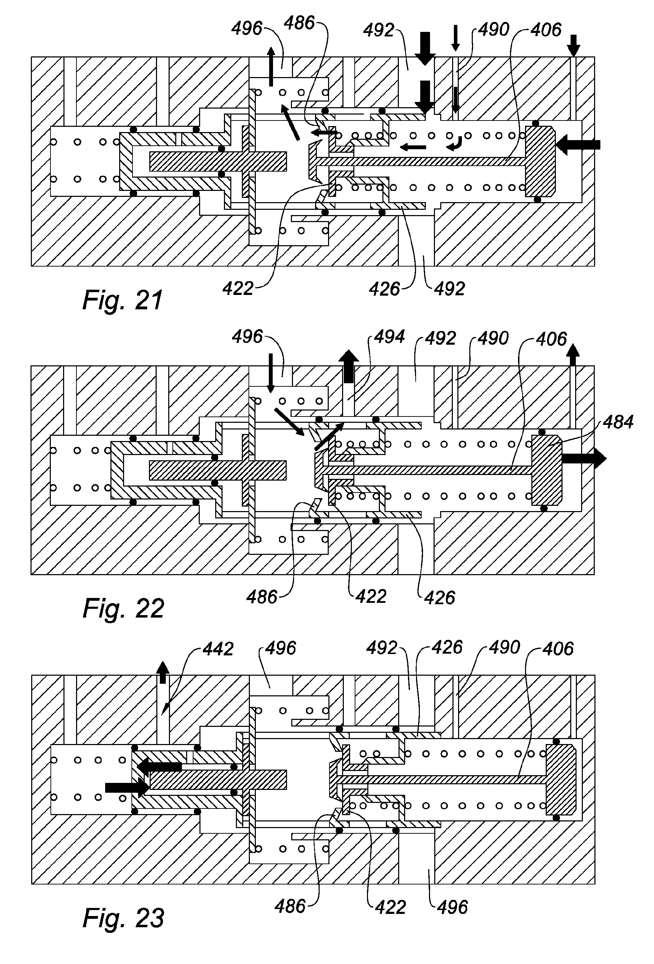

A la figure 21, la douille a tellement avancé qu'elle a mis en communication le conduit 492 avec le conduit 496. Le débit d'air peut donc maintenant être plus important en direction de la chambre de travail. De plus, l'air passe encore à travers le conduit 490 ouvert en premier. La membrane se déplace plus rapidement et augmente plus vite la pression dans le maître cylindre, ce qui accélère le déplacement de ces pièces.

On suppose toutefois ici que le conducteur interrompt la commande de freinage de sorte que le saut n'a pas lieu complètement. Ainsi, on n'atteint pas le point D. L'interruption de cette commande a été illustrée sur la figure 22. La baisse de la pression en amont du palpeur 484 entraîne le recul du piston de commande 406 qui emmène le clapet 422. Le contact entre la butée 416 et le clapet interrompt la communication d'air entre le conduit 496 et l'air atmosphérique des conduits 492 et 490.

De plus, le clapet s'éloigne du relief 486. L'espace ainsi ménagé entre eux met en communication le conduit 496 avec le conduit 494. En d'autres termes, la chambre de travail est mise en communication d'air avec la chambre à vide et est donc mise à la même pression. Elle se vide de son air et la pression dans le maître cylindre décroît, ce qui entraîne le recul progressif de la douille avec les autres pièces. Ce recul se fait ici encore sans que le ressort de valve 434 ne voie sa longueur modifiée de sorte que le conducteur ressent un effort constant à la pédale. De même que le déplacement de l'équipage vers l'avant lors de l'action de freinage, le déplacement vers l'arrière de l'équipage une fois le freinage interrompu se fait pendant que le clapet recherche son équilibre, le clapet étant en appui tantôt sur la butée 416 tantôt sur le relief 486.

A la figure 23, la douille revient finalement en appui contre l'épaulement, marquant sa fin de course vers l'arrière et le retour au point B avant le retour au point A.

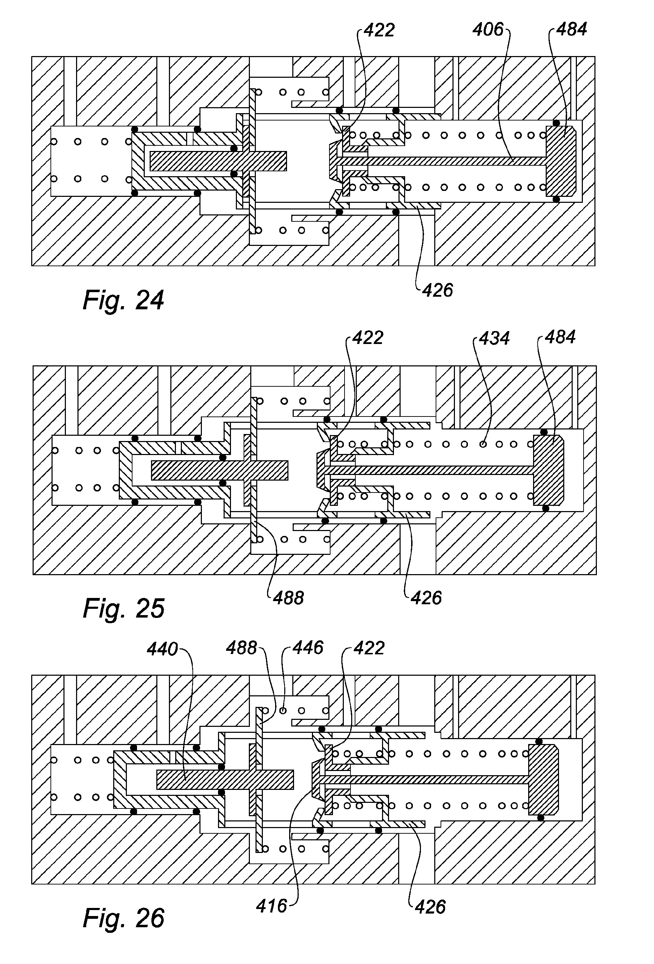

Un deuxième mode de fonctionnement du simulateur va être maintenant décrit en référence aux figures 24 à 30. Il s'agit cette fois d'un freinage complet, à savoir d'un freinage qui est commandé jusqu'à atteindre au moins la phase d'assistance proportionnelle.

A la figure 24, au point B, on suppose ici que le conducteur vient de commencer la commande de freinage, le palpeur 484 étant légèrement distant de la face arrière du carter.

A la figure 25, le piston de commande 406, la douille 426, le clapet 422 et le ressort de valve 434 se sont déplacés vers la gauche durant une partie du saut comme expliqué plus haut. On dépasse toutefois maintenant le point atteint lors de la description précédente.

Ainsi, à la figure 26, la pression dans le maître cylindre a tellement augmenté que la sollicitation qu'elle exerce sur le piston de réaction 440 lui permet maintenant de vaincre la force du ressort de saut 446 qui maintenait pendant le saut la rondelle 488 en appui vers l'avant contre le carter. Ainsi, à ce stade, non seulement la douille 426 se déplace vers la gauche mais le piston de réaction 440 se déplace vers la droite en direction de la butée 416, emmenant le disque 488.

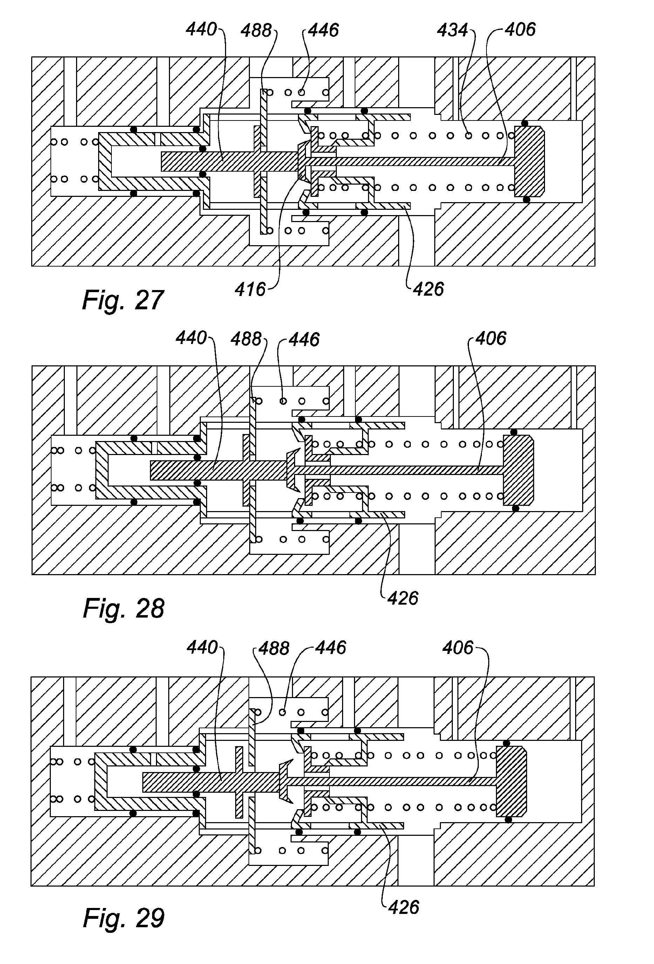

Ce mouvement se poursuit jusqu'au stade illustré à la figure 27 dans lequel l'extrémité arrière du piston de réaction 440 vient en contact avec la butée 416 du piston de commande 406. Ce stade marque la fin du saut au point D sur la figure 35 et le début de l'assistance proportionnelle. Dorénavant, la poursuite de l'actionnement de la pédale de frein par le conducteur va lui permettre de ressentir non seulement l'effort constant fourni par le ressort de valve 434 mais aussi la pression qui s'accroît dans le maître cylindre. Il va donc ressentir un effort environ proportionnel à celui de la pression dans le maître cylindre.

La douille 426 poursuit son mouvement vers l'avant jusqu'à venir en butée contre le carter, comme illustré à la figure 28. On choisit ce point de fin de course pour qu'il corresponde à la saturation du servofrein, c'est-à-dire au point F sur la figure 35. Cela signifie que la suite du freinage se fera sous l'effet du seul effort fourni par le conducteur, le servofrein ne pouvant plus fournir d'assistance.

Peu après, la suite du mouvement vers la gauche du piston de commande 406 qui pousse maintenant directement le piston de réaction 440 provoque le retour en butée vers l'avant de la rondelle 488. L'action du conducteur contre la pression du maître cylindre est aidée en cela par le ressort de saut 446 qui sollicite le piston de réaction 440 vers l'avant. On est au point au point G sur la figure 35.

La suite du mouvement se fait sans cette aide. Comme on le voit sur la figure 29, le piston de réaction 440 se sépare en effet de la rondelle 488 dans son déplacement vers l'avant. On est au point au point H sur la figure 35.

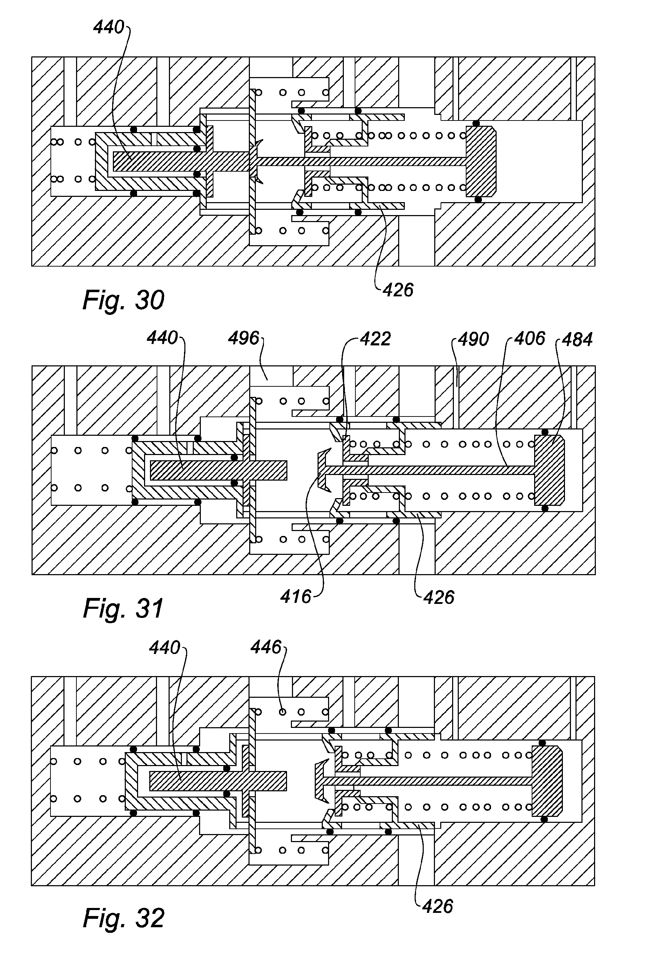

A la figure 30, le piston de réaction 440 parvient finalement en butée lui-même vers l'avant contre la douille 426, ce qui marque la course maximale des pièces du simulateur vers l'avant. On se trouve alors au point I sur la figure 35.

On va enfin décrire en référence aux figures 31 à 34 une circonstance de fonctionnement qui constitue un mode dégradé. On suppose en effet que la source de vide, défaillante, ne fournit plus de vide. La pression atmosphérique règne donc dans les deux chambres du servofrein qui ne peut pas fournir d'assistance.

Ainsi, on suppose à la figure 31 que le conducteur actionne le piston de commande 406 pour commander le freinage. L'augmentation de la pression à droite du palpeur 484 entraîne le décollement de la butée 416 à l'égard du clapet 422. Cela met en communication les conduits 496 et 490 mais n'entraîne aucun effet au niveau du servofrein et de la pression dans le maître cylindre.

Le conducteur actionne la pédale jusqu'à mettre en contact direct la tige 474 du dispositif de commande avec le piston 475 du maître cylindre. Il rattrape donc le jeu de découplage initial entre ces pièces.

Ensuite, le conducteur exerce donc directement une pression sur le maître cylindre, ce qui augmente la pression dans le liquide. Cette augmentation de pression se transmet à l'avant de la douille 426, à l'intérieur de cette dernière jusqu'au piston de réaction 440. Le ressort de saut 446 empêche le déplacement de ce dernier mais l'augmentation de la pression provoque l'avancée de la douille comme illustré à la figure 32.

Jusqu'à ce stade, l'avancée du piston de réaction n'a pas compressé d'autre ressort que le ressort 434 qui est de faible raideur. Le conducteur a donc préservé une fraction de son énergie. L'action du conducteur est donc plus efficace en cas de perte de vide.

A la figure 33, la pression dans le maître cylindre a continué à croître jusqu'à vaincre la résistance du ressort de saut 446, permettant ainsi de déplacer le piston de réaction 440 et la rondelle 488 vers la droite.

Finalement, un contact direct s'établit à la figure 34 entre le piston de commande 406 et le piston de réaction 440. A partir de ce stade, au cours de la suite de la commande, le conducteur s'oppose aussi au niveau du simulateur à la pression régnant dans le maître cylindre.

Bien entendu, on pourra apporter à l'invention de nombreuses modifications.

On pourra prévoir que le conduit atmosphérique 490 a même diamètre que le ou chaque conduit atmosphérique 492, son diamètre suffisant à éviter les perturbations dues au régime transitoire. On pourra prévoir de fermer le conduit 490 lorsqu'on ouvre le conduit 492.

## Revendications

1. Simulateur (100-400) à vanne trois voies pour servofrein de véhicule, comprenant :
- un carter présentant une enceinte (104-404) et trois conduits aptes chacun à communiquer directement avec l'enceinte ;
- un conduit (142-442) dit de maître cylindre ;
- un piston de commande (106-406) ;
- un coulisseau s'étendant dans l'enceinte (126-426) ;
- un ressort (134-434) en appui contre le piston de commande et le coulisseau,
**caractérisé en ce qu'**il comporte en outre un piston de réaction (140, 240, 340, 440) et que le conduit de maître cylindre (142-442) est agencé pour transmettre une pression de fluide sur le piston de réaction (140, 240, 340, 440), indépendamment du piston de commande, de sorte que cette pression sollicite le piston de réaction en direction opposée au piston de commande.

2. Simulateur selon la revendication précédente, le simulateur comprend un deuxième ressort (136-436) en appui contre le piston de réaction (140, 240, 340, 440) et le carter, et apte à solliciter le piston de réaction (140, 240, 340, 440) en direction du piston de commande (106-406).

3. Simulateur selon l'une quelconque des revendications précédentes, qui comprend un piston (140-440) dit de réaction, en communication avec un conduit (142-442) inapte à communiquer avec l'enceinte dans le simulateur, le simulateur comprenant au moins un organe élastique (146 ; 246 ; 346 ; 436, 446) apte à venir en appui, éventuellement indirect, sur le piston de réaction, par exemple en direction opposée au piston de commande (106-406).

4. Simulateur selon la revendication précédente, qui comprend un organe de réaction intermédiaire (488) sollicité par l'organe élastique (446) ou l'un des organes élastiques en direction du piston de réaction (440) et apte à venir en appui contre le carter (402).

5. Simulateur selon l'une quelconque des revendications 3 ou 4 dans lequel le piston de commande (106-406) est apte à venir en appui rigide, de préférence direct, contre le piston de réaction (140-440).

6. Simulateur selon l'une quelconque des revendications 3 à 5 dans lequel le piston de réaction (340; 440) est apte à venir en appui rigide, de préférence direct, sur le coulisseau (326; 426), par exemple en direction du piston de commande (306) ou en direction opposée au piston de commande (406).

7. Simulateur selon l'une quelconque des revendications précédentes, qui comprend un piston dit de réaction (140-440), distant du piston de commande lorsque le simulateur est au repos, le simulateur étant agencé de sorte que le piston de commande, sous l'effet d'une commande transmise depuis l'extérieur du simulateur, peut être déplacé sur une course prédéterminée en direction du piston de réaction sans transmettre de sollicitation à ce dernier.

8. Simulateur selon l'une quelconque des revendications précédentes qui comprend, parmi les trois conduits:
- un conduit (496) dit de travail ;
- un conduit (494) dit de vide ; et
- un premier conduit (492) dit atmosphérique,
le simulateur étant apte à mettre le conduit de travail en communication au choix avec le conduit de vide et avec le premier conduit atmosphérique,
le simulateur comprenant au moins un deuxième conduit atmosphérique (490) et étant apte à mettre le conduit de travail (496) en communication avec le deuxième conduit atmosphérique avant de le mettre en communication avec le premier conduit atmosphérique (492).

9. Système de freinage comprenant un servofrein et un simulateur de commande (100; 300; 400) du servofrein selon l'une quelconque des revendications précédentes, le simulateur s'étendant par exemple à distance du servofrein.

10. Servofrein (250) **caractérisé en ce qu'**il comprend un simulateur de commande (200) selon l'une quelconque des revendications 1 à 8.
